# EUROPÄISCHE PATENTSCHRIFT

(11) **EP 2 431 946 B1**
(45) Veröffentlichungstag und Bekanntmachung des Hinweises auf die Patenterteilung: **28.08.2013**
(21) Anmeldenummer: 10450192.9
(22) Anmeldetag: 17.12.2010
(51) Int. Cl.: G07B 15/06

(54) **Verfahren und Funkbake zur Übertragung von Nachrichten in einem Strassenkommunikationssystem**
Method and wireless beacon for transmitting information in a road communication system
Procédé et capteur radio pour la transmission d'informations dans un système de communication routier

(30) Priorität: 17.09.2010 EP 10450147
(43) Veröffentlichungstag der Anmeldung: 21.03.2012
(73) Patentinhaber: Kapsch TrafficCom AG, 1120 Wien (AT)
(72) Erfinder: Tijink, Jasja, 2384 Breitenfurt (AT)
(74) Vertreter: Weiser, Andreas

(56) Entgegenhaltungen:
- EP-A1- 1 172 766
- EP-A1- 2 058 992
- EP-A2- 0 767 446
- WO-A1-2010/105348
- WO-A2-2009/039818
- DE-A1- 19 605 654

## Beschreibung

Die vorliegende Erfindung betrifft ein Verfahren zur Übertragung von Nachrichten zwischen einer Funkbake (roadside e-quipment, RSE) und Fahrzeuggeräten (onboard units, OBUs) in einem Straßenkommunikationssystem gemäß dem Oberbegriff des Anspruchs 1 sowie eine Funkbake hier für.

Unter dem Begriff "Straßenkommunikationssystem" wird in der vorliegenden Beschreibung jede Art von elektronischem "Vehicle-to-Infrastructure"-System verstanden, wie elektronische Verkehrstelematik-, Verkehrsüberwachungs-, Verkehrssteuerungs- und Verkehrssignalisierungssysteme, elektronische Straßenmautsysteme, infrastrukturbasierte "Road-Safety"- und "Travel-Advisory"-Fahrerinformationssysteme od.dgl.

Ein Verfahren der einleitend genannten Art ist aus der EP 1 172 766 A1 bekannt. Die Priorität für die Versendung einer Nachricht aus dem Pufferspeicher wird in einer Ausführungsform aus einer Prioritatendatenbank herausgesucht

Aus der EP 2 058 992 A1 ist eine empfängerseitige Priorisierung von in einer OBU einlangenden Nachricht bekannt, u.zw. abhängig vom Dateninhalt der Nachrichten, welcher z.B. Ort, Geschwindigkeit, Richtung und Beschleunigung des Senders angeben kann.

In interoperablen Straßenkommunikationssystemen müssen Funkbaken mit einer Vielzahl von Fahrzeuggeräten verschiedenster Hersteller zusammenarbeiten können, welche jeweils unterschiedliche Nachrichtensende- und -empfangseigenschaften bzw. -fähigkeiten haben, wie unterschiedliche Sendeleistung, Empfangsempfindlichkeit, Bandbreite, Latenz, Datenumfang usw. Diese Situation wird noch verschärft durch den Umstand, dass die Fahrzeuge, welche die Fahrzeuggeräte mitführen, die Funkbake mit unterschiedlichen Geschwindigkeiten und Richtungen passieren, was die zur Nachrichtenübertragung zur Verfügung stehenden Übertragungszeiten und -kanalqualitäten weiter differenziert.

Die Erfindung setzt sich zum Ziel, ein Verfahren und eine Funkbake der eingangs genannten Art zu schaffen, welche diese stark variierenden Anforderungen berücksichtigen und Nachrichtenübertragungen mit optimaler Qualität zu einer Vielzahl verschiedener und sich unterschiedlich bewegender Fahrzeuggeräte gestatten.

Dieses Ziel wird in einem ersten Aspekt der Erfindung mit einem Verfahren gemäß Anspruch 1 erreicht.

Die Erfindung beruht auf dem neuen Ansatz, die an OBUs zu versendenden oder von diesen zur Verarbeitung erhaltenen Nachrichten abhängig von von diesen OBUs empfangenen Eigenschaften ebendieser OBUs zu sortieren und zu priorisieren. Dies unterscheidet sich von bekannten priorisierten Übertragungsprotokollen wie beispielsweise WAVE (wireless access in a vehicle environment), bei welchen an OBUs versandte oder von diesen erhaltene Nachrichten abhängig von den Eigenschaften bzw. Prioritätsangaben der Kommunikationspartner der OBUs priorisiert werden. Solche Kommunikationspartner sind in der Regel Applikationen, die auf der Funkbake oder daran angeschlossenen Einrichtungen laufen und z.B. unterschiedliche Prioritäten haben können. So genießen z.B. Nachrichten von Applikationen, die sich mit Straßensicherheit befassen, in der Regel höhere Priorität als von Applikationen, die sich beispielsweise "nur" mit der Vermautung von Fahrzeugen befassen. Bei den bekannten Empfangsprotokollen erfolgt die Priorisierung der Nachrichten also applikationsbezogen.

Im Gegensatz dazu erfolgt bei der Erfindung die Priorisierung der Nachrichten im Sende- bzw. Verarbeitungs-Pufferspeicher OBU-bezogen. Dadurch können beispielsweise OBUs, die geringe Sendeleistung haben, die in Kürze die Kommunikationszonen verlassen, die zuletzt nicht übertragen konnten oder die in einer Whitelist gespeichert sind, gegenüber anderen OBUs priorisiert werden. Das Verfahren der Erfindung ermöglicht dadurch eine Vielzahl von neuen und vorteilhaften Detaillösungen, welche nachstehend im Einzelnen erörtert werden.

So können die genannten Eigenschaften insbesondere sein:
- ein Betriebszustand, in dem die OBU vor der ersten Kontaktaufnahme mit der Funkbake war, u.zw. ein Arbeita- oder Ruhemodus; dadurch können OBUs, die von der Funkbake aus einem Ruhemodus geweckt wurden, was gewisse Zeit benötigt und von denen daher anzunehmen ist, dass sie nur mehr kurze Zeit verfügbar sind, bis sie wieder den Funkabdeckungsbereich der Funkbake verlassen, priorisiert werden;
- die Eingangsempfindlichkeit oder Sendeleistung der OBU; d.h. die OBU teilt ihre Funkfähigkeiten mit, so dass die Funkbake bei der Priorisierung der OBUs darauf Rücksicht nehmen kann;
- ein Betriebszustand, in dem sich die OBU bei der Nachrichtenubertragung befindet, u.zw. die Anzahl bislang fehlgeschlagener Übertragungsversuche ("retries") einer Nachricht; dadurch kann OBUs, die schon länger versuchen, eine Nachricht abzusetzen, höhere Priorität eingeräumt werden;
- der Füllstand eines Speichers der OBU, beispielsweise eines Nachrichten-Sendepuffers der OBU oder eines Wegepunkt-Aufzeichnungsspeichers der OBU, so dass OBUs, denen ein Speicherüberlauf droht, höhere Priorität eingeräumt werden kann; oder
- die Position und/oder der Bewegungsvektor der OBU, welche von dieser gemessen werden können, bevorzugt mittels Satellitennavigation; aus diesen Informationen kann unter Berücksichtigung des Funkabdeckungsbereichs der Funkbake die für die Nachrichtenübertragung mit der OBU zur Verfügung stehende Zeit geschätzt bzw. extrapoliert und dadurch nur kurzfristig zur Verfügung stehenden OBUs höhere Priorität gegenüber längerfristig verfügbaren OBUs eingeräumt werden.

Besonders günstig ist es, wenn beim Schritt des Sortierens eine vorgespeicherte Liste mit Eigenschaften und zugeordneten Sortier-Prioritäten verwendet wird, so dass der Sortiervorgang als regelbasiertes System implementiert werden kann.

Bevorzugt wird im Betrieb der Schritt des Sortierens bei Ermittlung einer neuen Eigenschaft eines Fahrzeuggeräts jeweils erneut durchgeführt, um den Pufferspeicher stets aktuell zu halten.

In einem zweiten Aspekt schafft die Erfindung eine Funkbake mit den Merkmalen des Anspruchs 4.

Die Funkbake kann die genannten Nachrichten beispielsweise von anderen Einheiten im Straßenkommunikationssystem erhalten, z.B. einer Zentrale, einem Proxy oder anderen Funkbaken. In einer bevorzugten Ausführungsform weist die Funkbake zumindest eine darauf laufende Softwareapplikation auf, welche direkt die Nachrichten zur Versendung an OBUs in den Pufferspeicher einspeist.

Ferner kann eine Softwareapplikation auch Nachrichten aus dem genannten Pufferspeicher in dessen Sortierreihenfolge zur Verarbeitung erhalten, d.h. der Pufferspeicher kann auch am "Eingang" einer oder mehrerer Softwareapplikationen der Funkbake liegen.

Hinsichtlich weiterer Vorteile der erfindungsgemäßen Funkbake wird auf die obigen Ausführungen zum Verfahren verwiesen.

Die Erfindung wird nachstehend anhand von in den beigeschlossenen Zeichnungen dargestellten Ausführungsbeispielen näher erläutert. In den Zeichnungen zeigt
Fig. 1 ein Blockschaltbild und gleichzeitig Signalflussdiagramm des Verfahrens und der Funkbake der Erfindung; und
Fig. 2 ein Blockschaltbild und gleichzeitig Signalflussdiagramm eines weiteren Beispiels.

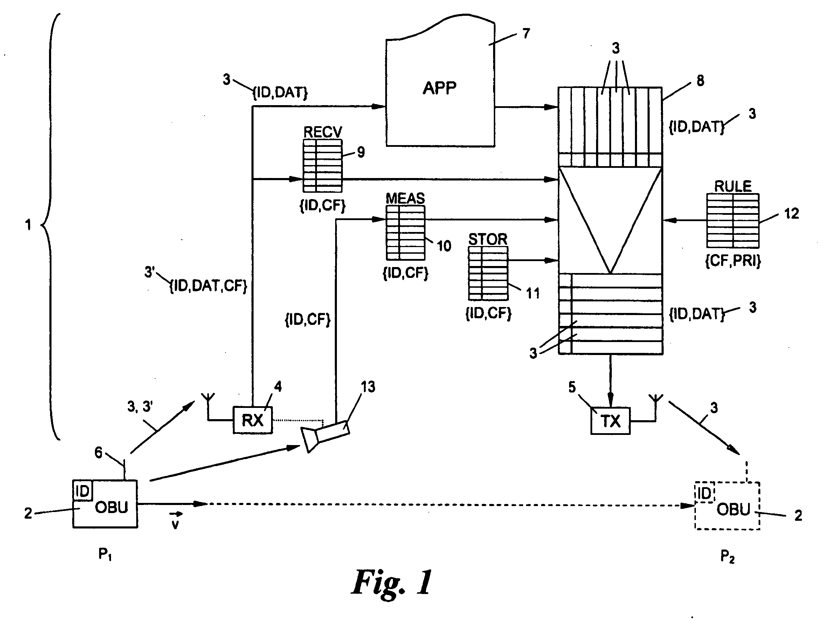

Fig. 1 zeigt eine Funkbake 1 eines Straßenmautsystems, wie sie beispielsweise als straßenseitige Einrichtung ("roadside equipment", RSE) an mautpflichtigen Straßen, Parkplätzen usw. postiert wird und mit einer (nicht dargestellten) Zentrale des Straßenmautsystems in Verbindung stehen kann, um Ortsnutzungen von (nicht dargestellten) Fahrzeugen vergebühren zu können. Die Funkbake 1 kommuniziert dazu mit Fahrzeuggeräten (onboard units, OBUs) 2, die von den Fahrzeugen mitgeführt werden.

Auch wenn das vorliegende Ausführungsbeispiel für ein Straßenmautsystem gegeben wird, können die Funkbaken 1 und OBUs 2 auch Teil eines beliebigen anderen elektronischen Straßenkommunikations- bzw. "Vehicle-to-Infrastructure"-Systems sein, z.B. eines elektronischen Verkehrstelematik-, -überwachungs-, -steuerungs- oder -signalisierungssystems, eines elektronischen Straßenmautsystems, eines "Road-Safety"- oder "Travel-Advisory"-Fahrerinformationssystems, od.dgl., und alle Bezugnahmen auf ein "Straßenmautsystem" umfassen auch Bezugnahmen auf derartige Systeme.

Eine OBU 2 ist stellvertretend gezeigt, wie sie sich von einer ersten Position P₁ mit einem Bewegungsvektor *v̅*, der ihre Geschwindigkeit und Richtung repräsentiert, zu einem zweiten Ort P₂ innerhalb des Funkabdeckungsbereichs der Funkbake 1 bewegt.

Die Funkbake 1 und die OBU 2 tauschen untereinander Nachrichten 3 aus, zu welchem Zweck die Funkbake 1 mit einem Empfänger 4 und einem Sender 5 ausgestattet ist, die auch zu einem Sendeempfänger zusammengebaut sein können. Die OBU 2 besitzt ebenfalls einen dafür geeigneten Sendeempfänger 6 sowie eine Kennung ID, mit der sie im Straßenmautsystem eindeutig identifizierbar ist.

Die Kennung ID kann der OBU 2 fest zugeordnet sein, beispielsweise in einen permanenten, semi-permanenten oder flüchtigen Speicher der OBU 2 eingeschrieben, ähnlich einer Geräte-oder z.B. MAC-Adresse, oder der OBU 2 auch nur temporär - für die Zwecke und Dauer einer eindeutigen Kommunikation im Stra-βenmautsystem - zugeordnet sein, ähnlich einer Kommunikationsoder z.B. IP-Adresse.

Die ausgetauschten Nachrichten 3 umfassen jeweils neben Nutzdaten DAT auch die Kennung ID der OBU 2, von der sie stammen bzw. an die sie gerichtet sind, um ihren Ursprung von dieser OBU 2 zu identifizieren bzw. an diese OBU 2 adressieren zu können.

Bei der in Fig. 1 gesetzten Ausführungsform werden die an die OBUs 2 zu versendenden Nachrichten 3 von einer (oder mehreren) auf der Funkbake 1 (oder einer daran angeschlossenen Einrichtung) laufenden Softwareapplikation 7 erzeugt, welche dazu auch ihrerseits Nachrichten 3 von den OBUs 2 erhalten kann; die Nachrichten 3 können demgemäß auch Datenpakete einer bidirektionalen Funkkommunikation zwischen der Funkbake 1 und den OBUs 2 sein. Dies ist jedoch nicht zwingend: z.B. können auch "reine" Sende-Nachrichten 3 ("Broadcasts") von der Funkbake 1 an passierende OBUs 2 ausgestrahlt werden, oder "reine" Empfangs-Nachrichten 3 von passierenden OBUs 2 an eine Funkbake 1 auf ihrem Weg abgesetzt werden.

Die von der Softwareapplikation 7 erzeugten Nachrichten 3 werden über einen Pufferspeicher 8 dem Sender 5 der Funkbake 1 zugeführt. Der Pufferspeicher 8 ist von seiner Grundkonzeption her ein FIFO-Stapelspeicher (first-in first-out stack), aus dem die darin in ihrer "Sortierreihenfolge" vorliegenden Nachrichten 3 aufeinanderfolgend dem Sender 5 zur Versendung zugeführt werden. Der Pufferspeicher 8 ist jedoch insoweit modifiziert, als dass die Sortierreihenfolge der darin befindlichen Nachrichten 3 veränderbar ist, u.zw. durch eine Sortiereinrichtung mit den Komponenten 9 - 12.

Die Sortierreihung 9 - 12 sortiert ("priorisiert") die Nachrichten 3 im Pufferspeicher 8 in Abhängigkeit von Eigenschaften CF der OBUs 2. Die Eigenschaften CF der OBUs 2 werden von einer Ermittlungseinrichtung 4, 13 ermittelt, welche den Empfänger 4 und/oder eine gesonderte Messeinrichtung 13 der Funkbake 1 umfasst. Mittels des Empfängers 4 können Eigenschaften CF direkt von den OBUs 2 empfangen werden, wenn diese ihre Eigenschaften CF selbst mitteilen. Mittels der Messeinrichtung 13 können die Eigenschaften CF von der Funkbake 1 aus gemessen werden.

Vom Empfänger 4 empfangene Eigenschaften CF können gemeinsam mit den von der OBU 2 an die Funkbake 1 gesandten Nachrichten 3 in Form von modifizierten bzw. ergänzten Nachrichten 3' gesandt werden und sind damit jeweils auch mit der Kennung ID der OBU 2 versehen. Von der Messeinrichtung 13 gemessene Eigenschaften CF müssen zuerst noch der jeweiligen OBU 2 bzw. deren Kennung ID zugeordnet werden. Dazu kann die Messeinrichtung 13 beispielsweise mit dem Empfänger 4 gekoppelt sein kann, um zu einer Messung einer Eigenschaft CF auch die Kennung ID der jeweils vermessenen OBU 2 zu erhalten.

Die vom Empfänger 4 der Ermittlungseinrichtung 4, 13 ermittelten Eigenschaften CF werden beispielsweise in einem ersten Speicher 9 der Sortiereinrichtung 9 - 12 unter der Kennung ID der OBU 2 abgelegt. In gleicher Weise können die von der Messeinrichtung 13 gemessenen Eigenschaften CF in einem zweiten Speicher 10 der Sortiereinrichtung 9 - 12 ebenfalls unter der jeweiligen Kennung ID abgelegt werden.

Eine weitere Möglichkeit ist, dass die Sortiereinrichtung 9 - 12 einen dritten Speicher 11 mit zu bestimmten Kennungen ID vorgespeicherten Eigenschaften CF enthält. Diese vorgespeicherten Eigenschaften CF können beispielsweise bestimmte Gattungen von OBU 2 charakterisieren, die priorisiert werden sollen, z.B. OBUs von Einsatzfahrzeugen usw., oder aus einer Ermittlung von Eigenschaften CF durch Ermittlungseinrichtung 4, 13 anderer Funkbaken 1, welche die OBU 2 passiert hat, stammen, die über die Datenverbindungen des Straßenmautsystems mitgeteilt wurden.

Es versteht sich, dass nicht jede der Komponenten 4, 13 der Ermittlungseinrichtung und nicht jeder der Komponenten 9 - 12 der Sortiereinrichtung vorhanden sein muss.

Die Sortiereinrichtung 9 - 12 verfügt ferner über eine Tabelle 12 ("rules set") mit Eigenschaften CF und diesen zugeordneten Prioritäten PRI. Wenn die betrachtete Eigenschaft CF der OBU 2 beispielsweise ihre Geschwindigkeit *v̅* ist, kann z.B. einer hohen Geschwindigkeit CF = *v̅* eine hohe Priorität PRI eingeräumt werden, weil anzunehmen ist, dass eine schnelle OBU 2 den Funkabdeckungsbereich der Funkbake 1 rasch wieder verlassen und daher nur wenig Zeit zur Funkkommunikation mit der OBU 2 zur Verfügung stehen wird.

Die Sortiereinrichtung 9 - 12 reiht bzw. sortiert nun die im Pufferspeicher 8 unter Kennungen ID vorliegenden Nachrichten 3 um, u.zw. entsprechend der Eigenschaft CF, die zur jeweiligen Kennung ID von der Ermittlungseinrichtung 4, 13 ermittelt und in den Speichern 9 - 11 hinterlegt wurde. Die genaue Sortierpriorität PRI der Ausprägung einer bestimmten Eigenschaft CF kann dabei der Tabelle 12 entnommen werden.

Im Ergebnis werden die Nachrichten 3 aus dem Pufferspeicher 8 in einer Reihenfolge abgearbeitet und versandt, welche von den Eigenschaften CF der OBUs 2, die die Funkbake 1 passieren, abhängt. Die betrachteten Eigenschaften CF der OBUs 2 können dabei sein:
A) wenn sie von der OBU 2 selbst mitgeteilt werden:
   - ein Betriebszustand, in dem die OBU 2 vor der ersten Kontaktaufnahme mit dieser Funkbake 1 war, insbesondere ob sie sich vor dieser ersten Kontaktaufnahme (dem "Aufwecken") in einem Arbeitsmodus oder einem stromsparenden Ruhemodus (Schlafmodus) befand; letzteres weist darauf hin, dass aufgrund der für das Aufwecken erforderlichen Zeit bereits eine gewisse Zeitspanne verstrichen sein mag, innerhalb der sich die OBU 2 aufgrund ihrer Geschwindigkeit *v̅* im Funkabdeckungsbereich der Funkbake 1 vorwärts bewegt hat, so dass nur mehr eine geringere restliche Zeit für die weitere Funkkommunikation zur Verfügung steht; im Ergebnis können OBUs 2, die "geschlafen haben", gegenüber OBUs 2, die bereits "wach" waren, priorisiert werden;
   - eine Empfangsempfindlichkeit und/oder Sendeleistung der OBU 2, so dass sendeschwächere OBUs oder solche, mit denen eine Kontaktaufnahme schwieriger zu erwarten ist, priorisiert werden können;
   - ein Betriebszustand, in dem sich die OBU 2 bei der unmittelbaren bzw. aktuellen Nachrichtenübertragung befindet, z.B. die Anzahl an bislang fehlgeschlagenen Übertragungsversuchen ("retries") einer Nachricht 3, gegebenenfalls auch an frühere Funkbaken 1 auf ihrem Weg, so dass solche OBUs 2 priorisiert werden können;
   - der Füllstand eines Wegepunkt-Aufzeichnungsspeichers in einer OBU 2, die beispielsweise ihre Positionen misst und als Wegepunkte-Aufzeichnung ("position fix tracks") speichert, um diese an Funkbaken auf ihrem Weg abzusetzen; dadurch können OBUs mit vollem Wegepunkt-Aufzeichnungsspeicher priorisiert werden, um einen Speicherüberlauf zu vermeiden;
   - der Füllstand eines Sende-Pufferspeichers in der OBU 2, um auch dort einen Pufferüberlauf zu vermeiden; oder
   - die Position Pᵢ und/oder der Bewegungsvektor *v̅* der OBU 2, welche diese beispielsweise autark mittels Satellitennavigation (global navigation satellite systems, GNSS) oder durch Funklokalisierung in Mobilfunknetzen oder dem Funkfeld der Funkbake 1 selbst ermitteln und mitteilen kann; daraus kann der weitere Weg der OBU 2 im Funkabdeckungsbereich der Funkbake 1 extrapoliert und damit die für die Funkkommunikation mit der OBU 2 zur Verfügung stehende Zeit geschätzt werden, bis diese wieder den Funkabdeckungsbereich verlässt; auf diese Weise können OBUs, mit denen nur eine kurze Kontaktaufnahme zu erwarten ist, gegenüber längerfristig verfügbaren OBUs priorisiert werden.
B) wenn sie von der Ermittlungseinrichtung 4, 13 der Funkbake 1 ermittelt werden:
   - die oben erwähnte Position Pᵢ und/oder der oben erwähnte Bewegungsvektor *v̅* der OBU 2, beispielsweise indem die Messeinrichtung 13 ein Radargerät, Lidargerät, Laserscanner, Schallsensor, eine Lichtschranke, eine Kamera usw. ist, mit welcher diese Informationen von der Funkbake 1 aus gemessen werden, um wie oben erörtert kürzerfristig verfügbare OBUs gegenüber längerfristig verfügbaren OBUs zu priorisieren; oder
   - eine Sendeleistung der OBU 2, welche indirekt in der Funkbake 1 anhand der darin auftretende Empfangsleistung, Empfangsqualität, z.B. Bitfehlerrate, Signal/Rausch-Verhältnis usw., gemessen werden kann, um OBUs 2, zu denen eine schlechte Verbindungsqualität herrscht, bei denen also die Gefahr besteht, dass sich die Verbindung weiter verschlechtert oder abreißen könnte, zu priorisieren;
C) wenn sie im Speicher 11 vorgespeichert sind:
   - Übertragungsprioritäten, welche bestimmten OBUs 2 mit Kennungen ID - individuell oder bestimmten "Klassen" von OBUs, z.B. OBUs eines bestimmten Herausgebers, einer bestimmten Type, einer bestimmten Fahrzeugklasse usw. - vorweg zugeordnet werden, z.B. OBUs 2 von Einsatzfahrzeugen usw.; oder
   - beliebige Eigenschaften CF wie vorgenannt, die aus früheren Tests bzw. "Erfahrungen" mit OBUs 2 erhalten wurden, z.B. von anderen Funkbaken 1 im Straßenmautsystem.

Das Verfahren von Fig. 1 gestaltet sich daher wie folgt:

Zunächst wird von jeder OBU 2, die in den Sendeempfangsbereich der Funkbake 1 eintritt, zumindest eine Eigenschaft CF ermittelt, dann werden die im Pufferspeicher 8 unter den Kennungen ID von der Softwareapplikation 7 hinterlegten Nachrichten 3 abhängig von den zu diesen Kennungen ID ermittelten und in den Speichern 9 - 11 hinterlegten Eigenschaften CF sortiert, insbesondere unter Verwendung der Regelsatz-Tabelle 12 mit den Definitionen, welchen Eigenschaften CF welche Prioritäten PRI zuzuordnen sind, und dann werden die Nachrichten 3 aus dem Pufferspeicher 8 in der Reihenfolge ihrer Sortierung über den Sender 5 an die OBUs 2 versandt. Jedesmal, wenn eine neue Eigenschaft CF für eine Kennung ID verfügbar wird, wird die Sortierung des Pufferspeichers 8 neu durchgeführt, um die Sortierreihenfolge jeweils aktuell an die im Funkabdeckungsbereich der Funkbake 1 verfügbaren OBUs 2 optimal anzupassen.

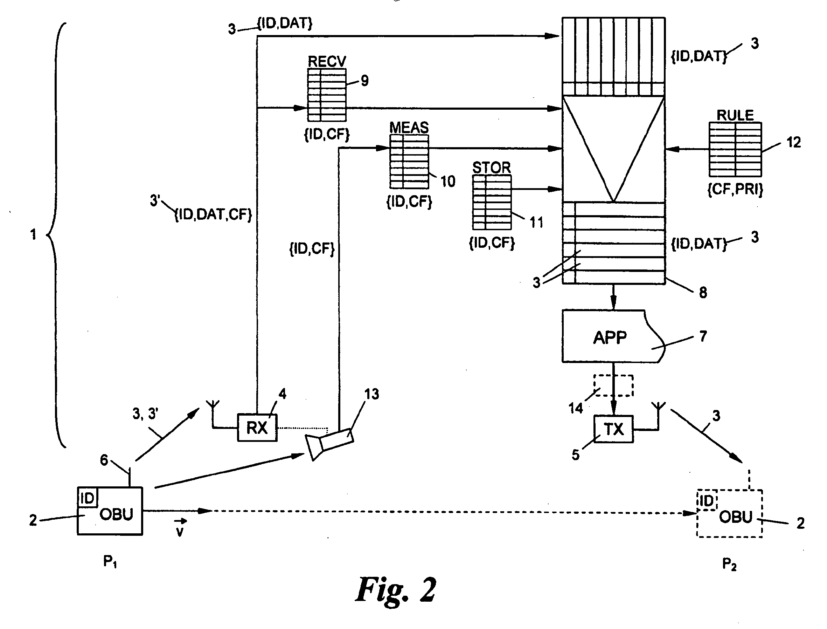

Fig. 2 zeigt eine Abwandlung der Funkbake und des Verfahrens von Fig. 1, welche sich nur dadurch von Fig. 1 unterscheidet, dass der Pufferspeicher 8 mit der Sortiereinrichtung 9 - 12 und der Ermittlungseinrichtung 4, 13 am Eingang statt am Ausgang der Softwareapplikation 7 liegt. Das Verfahren kann in diesem Sinne auch dazu verwendet werden, die von den OBUs 2 an die Softwareapplikation 7 zur Verarbeitung gesandten Nachrichten 3 entsprechend den Eigenschaften CF der OBUs 2 zu priorisieren.

Eine weitere Möglichkeit ist durch den strichlierten Block 14 in Fig. 2 skizziert. Der Block 14 versinnbildlicht die gesamten Komponenten von Fig. 1 am Ausgang der Softwareapplikation 7. Die Nachrichten 3 können somit sowohl am Eingang als auch am Ausgang einer oder mehrerer Softwareapplikationen 7 gemäß dem hier geschilderten Verfahren priorisiert werden.

Es versteht sich, daß die in den Fig. 1 und 2 dargestellten Blöcke und Komponenten nicht notwendigerweise in gesonderten physischen Einheiten realisiert sein müssen, sondern im Einzelfall - soweit möglich - auch durch entsprechende Softwarekomponenten eines Computerprogramms implementiert sein können. So können beispielsweise der Pufferspeicher 8 und/oder eine, mehrere oder alle Komponenten der Sortiereinrichtung 9 - 12 als Softwarekomponenten, insbesondere auch als Teile der Softwareapplikation 7, ausgeführt sein.

## Patentansprüche

1. Verfahren zur Übertragung von Nachrichten (3) zwischen einer Funkbake (1) und mehreren diese passierenden Fahrzeuggeräten (2) mit eindeutigen Kennungen (ID) in einem Straßenkommunikationssystem, wobei die an die Fahrzeuggeräte zu versendenden Nachrichten (3) in der Funkbake jeweils mit einer Kennung (ID) eines Fahrzeuggeräts (2) versehen in einem Pufferspeicher (8) der Funkbake (1) zur sequentiellen Versendung zwischengespeichert werden, **gekennzeichnet durch**:
Empfangen, in der Funkbake (1), von jedem dieser Fahrzeuggeräte (2), das in den Sendeempfangsbereich der Funkbake (1) eintritt, einer Information über zumindest eine Eigenschaft (CF), und zwar
- die Empfangsempfindlichkeit oder die Sendeleistung des Fahrzeuggeräts (2) oder
- einen Betriebszustand des Fahrzeuggeräts (2), in dem das Fahrzeuggerät (2) vor der ersten Kontaktaufnahme mit der Funkbake (1) war, nämlich ein Arbeits- oder Ruhemodus, oder
- einen Betriebszustand des Fahrzeuggeräts (2), in dem sich das Fahrzeuggerät (2) bei der Nachrichtenübertragung befindet, nämlich die Anzahl an bislang fehlgeschlagenen Übertragungsversuchen einer Nachricht (3), oder
- die Position (Pᵢ) und/oder den Bewegungsvektor (ν̅) des Fahrzeuggeräts (2), welche von diesem gemessen werden, bevorzugt mittels Satellitennavigation,
jeweils gemeinsam mit der Kennung (ID) des Fahrzeuggeräts (2) und Nutzdaten (DAT);
Sortieren der im Pufferspeicher (8) unter den Kennungen (ID) zur Versendung vorliegenden Nachrichten (3) entsprechend den zu diesen Kennungen (ID) empfangenen Informationen; und
sequentielles Versenden der Nachrichten (3) aus dem Pufferspeicher (8) an die Fahrzeuggeräte (2) in der Reihenfolge der Sortierung.

2. Verfahren nach Anspruch 1, **dadurch gekennzeichnet, dass** beim Schritt des Sortierens eine vorgespeicherte Liste (12) mit möglichen Eigenschaften (CF) und zugeordneten Sortier-Prioritäten (PRI) verwendet wird.

3. Verfahren nach Anspruch 1 oder 2, **dadurch gekennzeichnet, dass** der Schritt des Sortierens bei Empfang einer neuen Eigenschaftsinformation erneut durchgeführt wird.

4. Funkbake für ein Straßenkommunikationssystem zur Übertragung von Nachrichten (3) zwischen der Funkbake (1) und mehreren sie passierenden Fahrzeuggeräten (2) mit eindeutigen Kennungen (ID), mit
zumindest einem Pufferspeicher (8), in dem die Nachrichten (3) jeweils mit einer Kennung (ID) eines Fahrzeuggeräts (2) versehen zur sequentiellen Versendung zwischengespeichert sind, und
einem dem Pufferspeicher (8) nachgeordneten Sendeempfänger (4, 5), **gekennzeichnet durch**
eine Empfangseinrichtung (4), die von jedem Fahrzeuggerät (2), das in den Sendeempfangsbereich der Funkbake (1) eintritt, eine mit einer Kennung (ID) des Fahrzeuggeräts (2) und Nutzdaten (DAT) mitübersandte Information über zumindest eine Eigenschaft (CF), und zwar
- die Empfangsempfindlichkeit oder die Sendeleistung des Fahrzeuggeräts (2) oder
- einen Betriebszustand des Fahrzeuggeräts (2), in dem das Fahrzeuggerät (2) vor der ersten Kontaktaufnahme mit der Funkbake (1) war, nämlich ein Arbeits- oder Ruhemodus, oder
- einen Betriebszustand des Fahrzeuggeräts (2), in dem sich das Fahrzeuggerät (2) bei der Nachrichtenübertragung befindet, nämlich die Anzahl an bislang fehlgeschlagenen Übertragungsversuchen einer Nachricht (3), oder
- die Position (Pᵢ) und/oder den Bewegungsvektor (ν̅) des Fahrzeuggeräts (2), welche von diesem gemessen werden, bevorzugt mittels Satellitennavigation,
empfängt; und
eine an die Empfangseinrichtung (4) angeschlossene Sortiereinrichtung (9 - 12) für den Pufferspeicher (8), welche dafür ausgebildet ist, die im Pufferspeicher (8) unter den Kennungen (ID) zur Versendung vorliegenden Nachrichten (3) entsprechend den zu diesen Kennungen (ID) empfangenen Eigenschaften (CF) zu sortieren.

5. Funkbake nach Anspruch 4, **gekennzeichnet durch** zumindest eine auf der Funkbake (1) laufende Softwareapplikation (7), welche Nachrichten (3) zur Versendung an Fahrzeuggeräte (2) in den Pufferspeicher (8) einspeist.

## Claims

1. Method for transmitting messages (3) between a radio beacon (1) and multiple onboard units (2) passing this with unique identifiers (ID) in a road communication system, wherein the messages (3) to be transmitted to the onboard units, respectively provided with an identifier (ID) of an onboard unit (2) in the radio beacon are stored in a buffer memory (8) of the radio beacon (1) for sequential despatch, **characterised by**:
receiving in the radio beacon (1) from each of these onboard units (2) entering the transmitting-receiving area of the radio beacon (1), information relating to at least one characteristic (CF), being
- the receive sensitivity or the transmitting power of the onboard unit (2), or
- an operating mode of the onboard unit (2), which the onboard unit (2) was in before the first contact was made with the radio beacon (1), i.e. a working or resting mode, or
- an operating mode of the onboard unit (2), which the onboard unit (2) is in during transmission of the message, i.e. the number of unsuccessful attempts to transmit a message (3) so far, or
- the position (P₁) and/or the motion vector (ν̅) of the onboard unit (2), which are measured by this, preferably by means of satellite navigation,
respectively provided together with the identifier (ID) of the onboard unit (2) and user data (DAT);
sorting the messages (3) present for despatch in the buffer memory (8) under the identifiers (ID) according to the information received for these identifiers (ID), and
sequentially despatching the messages (3) from the buffer memory (8) to the onboard units (2) in the sequence they were sorted.

2. Method according to claim 1, **characterised in that** in the sorting step a previously stored list (12) with characteristics (CF) and assigned sorting priorities (PRI) is used.

3. Method according to claim 1 or 2, **characterised in that** the sorting step is conducted once again upon determination of a new characteristic information.

4. Radio beacon for a road communication system for transmitting messages (3) between the radio beacon (1) and multiple onboard units (2) passing this with unique identifiers (ID), with
at least one buffer memory (8), in which the messages (3) respectively provided with an identifier (ID) of an onboard unit (2) are stored for sequential despatch, and
a transceiver (4, 5) connected downline of the buffer memory (8), **characterised by** a receiving means (4), which from each onboard unit (2) entering the transmitting-receiving area of the radio beacon (1) receives information relating to at least one characteristic (CF) of the onboard unit (2) transmitted together with an identifier (ID) of the onboard unit (2) and user data (DAT), the characteristic being
- the receive sensitivity or the transmitting power of the onboard unit (2), or
- an operating mode of the onboard unit (2), which the onboard unit (2) was in before the first contact was made with the radio beacon (1), i.e. a working or resting mode, or
- an operating mode of the onboard unit (2), which the onboard unit (2) is in during transmission of the message, i.e. the number of unsuccessful attempts to transmit a message (3) so far, or
- the position (P₁) and/or the motion vector (ν̅) of the onboard unit (2), which are measured by this, preferably by means of satellite navigation; and
a sorting means (9 - 12) for the buffer memory (8), which is connected to the receiving means (4) and is configured sorting the messages (3) present for despatch in the buffer memory (8) under the identifiers (ID) according to the characteristics (CF) received for these identifiers (ID).

5. Radio beacon according to claim 4, **characterised by** at least one software application (7) running on the radio beacon (1), which feeds messages (3) into the buffer memory (8) for despatch to onboard units (2).

## Revendications

1. Procédé de transmission d'informations (3) entre une radiobalise (1) et plusieurs appareils de véhicule (2) passant par celle-ci avec des identifiants uniques (ID) dans un système de communication routier, les informations (3) à envoyer aux appareils de véhicule dans la radiobalise, respectivement pourvues d'un identifiant (ID) d'un appareil de véhicule (2), étant temporairement enregistrées dans une mémoire tampon (8) de la radiobalise (1) pour l'envoi séquentiel, **caractérisé par** :
la réception, dans la radiobalise (1), de chacun de ces appareils de véhicule (2) qui entre dans la zone d'émission-réception de la radiobalise (1), d'une information sur au moins une propriété (CF), c'est-à-dire
- la sensibilité de réception ou la puissance d'émission de l'appareil de véhicule (2) ou
- un état de fonctionnement de l'appareil de véhicule (2), dans lequel l'appareil de véhicule (2) était avant la première prise de contact avec la radiobalise (1), à savoir un mode de travail ou de repos, ou
- un état de fonctionnement de l'appareil de véhicule (2), dans lequel l'appareil de véhicule (2) se trouve lors de la transmission de l'information, à savoir le nombre de tentatives de transmission d'une information (3) qui ont échoué jusqu'à présent ou
- la position (P₁) et/ou le vecteur de déplacement (ν̅) de l'appareil de véhicule (2) qui sont mesurés par celui-ci, de préférence à l'aide de la navigation par satellite, respectivement conjointement avec l'identifiant (ID) de l'appareil de véhicule (2) et des données utiles (DAT) ;
le tri des informations (3) présentes pour l'envoi dans la mémoire tampon (8) sous les identifiants (ID) en fonction des informations reçues relatives à ces identifiants (ID) ; et
l'envoi séquentiel des informations (3) de la mémoire tampon (8) aux appareils de véhicule (2) dans l'ordre du tri.

2. Procédé selon la revendication 1, **caractérisé en ce que**, lors de l'étape de tri, une liste préenregistrée (12) contenant des propriétés possibles (CF) et des priorités de tri associées (PRI) est utilisée.

3. Procédé selon la revendication 1 ou 2, **caractérisé en ce que** l'étape de tri est à nouveau réalisée lors de la réception d'une nouvelle information de propriété.

4. Radiobalise d'un système de communication routier pour la transmission d'informations (3) entre la radiobalise (1) et plusieurs appareils de véhicule (2) passant par celle-ci avec des identifiants uniques (ID), présentant au moins une mémoire tampon (8), dans laquelle les informations (3) respectivement pourvues d'un identifiant (ID) d'un appareil de véhicule (2) sont temporairement enregistrées pour l'envoi séquentiel, et
un émetteur/récepteur (4, 5) agencé en aval de la mémoire tampon (8), **caractérisée par**
un dispositif de réception (4) qui reçoit de chaque appareil de véhicule (2) qui entre dans la zone d'émission-réception de la radiobalise (1), une information envoyée avec un identifiant (ID) de l'appareil de véhicule (2) et des données utiles (DAT) sur au moins une propriété (CF), c'est-à-dire
- la sensibilité de réception ou la puissance d'émission de l'appareil de véhicule (2) ou
- un état de fonctionnement de l'appareil de véhicule (2), dans lequel l'appareil de véhicule (2) était avant la première prise de contact avec la radiobalise (1), à savoir un mode de travail ou de repos, ou
- un état de fonctionnement de l'appareil de véhicule (2), dans lequel l'appareil de véhicule (2) se trouve lors de la transmission de l'information, à savoir le nombre de tentatives de transmission d'une information (3) qui ont échoué jusqu'à présent, ou
- la position (P₁) et/ou le vecteur de déplacement (ν̅) de l'appareil de véhicule (2) qui sont mesurés par celui-ci, de préférence à l'aide de la navigation par satellite ;
et
un dispositif de tri (9-12) qui est raccordé au dispositif de réception (4) pour la mémoire tampon (8) et qui est réalisé afin de trier les informations (3) présentes pour l'envoi dans la mémoire tampon (8) sous les identifiants (ID) en fonction des propriétés (CF) reçues relatives à ces identifiants (ID).

5. Radiobalise selon la revendication 4, **caractérisée par** au moins une application logicielle (7) tournant sur la radiobalise (1) qui injecte des informations (3) dans la mémoire tampon (8) pour l'envoi à des appareils de véhicule (2).
